Europäisches Patentamt

European Patent Office

Office européen des brevets

(11) Publication number: **0 474 031 A2**

# EUROPEAN PATENT APPLICATION

(21) Application number: **91114000.2**

(22) Date of filing: **21.08.91**

(51) Int. Cl.⁵: **B23K 9/10**, //B23K9/20

(30) Priority: **04.09.90 JP 233835/90**

(43) Date of publication of application:
**11.03.92 Bulletin 92/11**

(84) Designated Contracting States:
**DE FR GB**

(71) Applicant: **NIPPON STUD WELDING KABUSHIKI KAISHA**
**2-2, Atago 1-Chome, Minato-ku**
**Tokyo(JP)**

(72) Inventor: **Matukawa,Toshio Nippon Stud Welding**
**Kabushiki Kaisha 2-2,Atago 1-chome**
**Minato-ku,Tokyo(JP)**
Inventor: **Shiroshita,Toshiharu Nippon Stud Welding**
**Kabushiki Kaisha 2-2,Atago 1-chome**
**Minato-ku,Tokyo(JP)**

(74) Representative: **Glawe, Delfs, Moll & Partner Patentanwälte**
**Postfach 26 01 62 Liebherrstrasse 20**
**W-8000 München 26(DE)**

(54) Inverter type power control unit for stud welding.

(57) A inverter type power control unit for stud welding comprising a rectifier circuit (3) to convert three-phase AC power (2) to DC power, an inverter circuit (6) adapted to be supplied with said DC power and to convert this DC power to pulsating AC power (E3), and a welding transformer (8). Said welding transformer (8) is adapted to be supplied at the primary side with said pulsating AC power (E3) and to output, inturn, at the secondary side DC welding current through a converter and a DC reactor (11).

FIG.1

The present invention broadly relates to an inverter type power control unit for arc stud welding to sheet metal.

In general, when a stud diameter excesses approximately 4 mm and a base metal (sheet metal) thickness falls below approximately 0,7 mm, it becomes impossible to maintain a thermal balance established by arc heat between the stud and the base metal resulting in that the base metal is partially overheated, molten down or, in an extreme case, pierced with holes and a strength is seriously deteriorated. To overcome this problem, the usual practice has relied upon a combination of current waveform and current value in order that an effective welding may be carried out. Situation is more serious for the case in which both the base metal and the studs are plated with zinc. The power control unit for welding having been commonly used is the DC power unit adapted to obtain DC current by single-phase full-wave rectification as will be apparent from the circuit diagramm as shown in Fig. 9 of the accompanying drawing and voltage as well as current thereof vary every 1/2 Hz (with an electrical angle of 180° and the commercial frequency of 50 to 60 HZ) in a waveform as shown by Fig. 9. The waveform and the current value have been usually adjusted by a voltage level of a transformer, values of an inductance L and a resistor R, and a turn-on control angle of a thyristor. However, the period is basically fixed to 1/2 Hz (180°) by the circuit characteristics and it is impossible to vary this period.

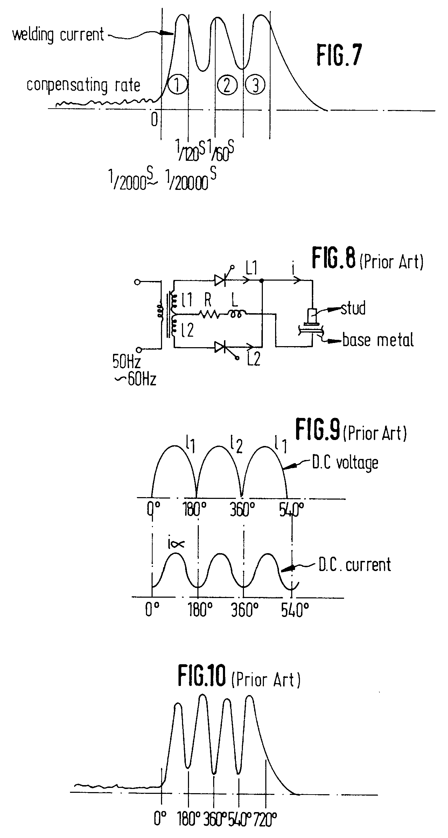

Referring to Fig. 10, a waveform of the welding current provided by this power unit of well known art is illustrated, which is commonly used for stud welding.

During the process of arc stud welding, it is the usual procedure that an arc is generated between the stud and the base metal, then both the stud and the base metal are locally molten, upon which the stud is quickly moved i.e. thrown or plunged against the base metal while the arc is maintained, and the process is completed.

It is important in such usual procedure to apply or plunge the stud against the base metal well before the welding current becomes significantly weak. In other words, after both the stud and the base metal have been molten to an appropriate extent on the final stage of welding, the art must continue to be formed while the stud is plunged against the base metal. If the arc is extinguished or the tail current becomes unacceptably low during this operation, no satisfactory result could be obtained. Accordingly, proper timing of the stud plunge operation is very important. With said prior art, the stud plunge actually performed by using a stud gun (not shown) relies upon a spring force adapted to be activated as an electromagnet is deenergized under control of an electric signal.

When utilized in the stud welding, the conventional DC power unit of single-phase full-wave rectification type as has been mentioned above has usually encountered problems as following:

a) The wave period of welding current is fixed to every 180° (frequency of 50 to 60 Hz).

b) The waveform is limited to the sinusoidal waveform.

c) The tail current rapidly decreases so that a delayed timing of stud plunge would result in a failure of welding because the arc might have already been exttinguished. As will be appreciated from the foregoing, a time point at which the stud plunge begins is not constant and therefore it is desired that the tail current should be as high as possible and maintained for a duration as long as possible.

With the power control unit of prior art, the tail current is maintained by said inductance L as shown in Fig. 8 and the higher a value of this inductance L, the higher the tail current can be maintained for a long duration. However, there is a limit in increasing the value of the inductance L from the viewpoint of arc stability.

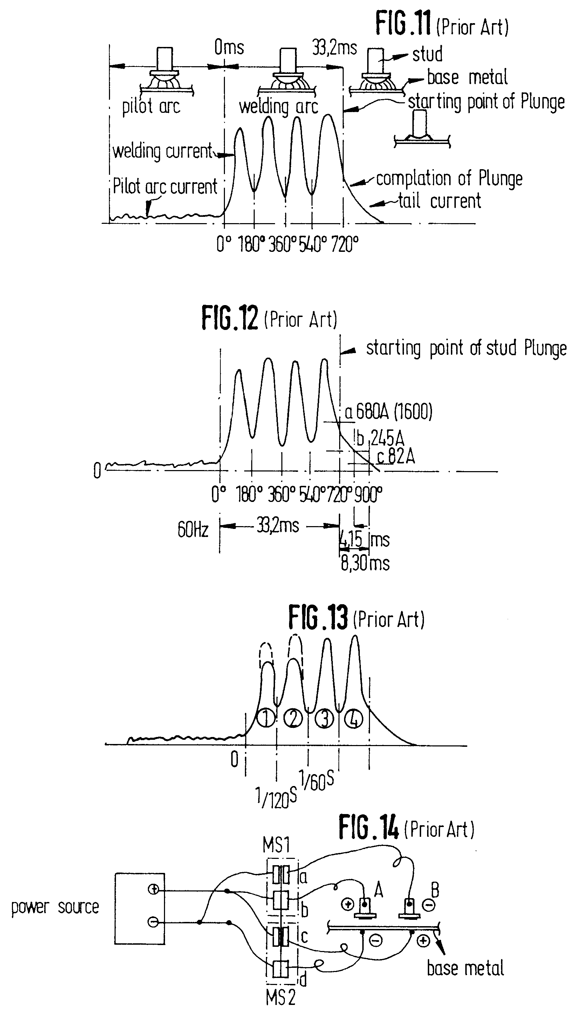

Fig. 12 graphically illustrates welding current, tail current and timing of stud plunge for the conventional power control unit of single-phase full-wave rectification type. In this example, the starting point of stud plunge is set to 33,2 ms after a time point of transition from pilot arc current to welding arc current and a level of the tail current depends on a timing of stud plunge as follows:

at the point a (i.e., 33,2 ms)          680A

at the point $\bar{b}$ (delayed with respect to said point a by 4,15 m$\bar{s}$          245A

$\bar{and}$

at the point c (delayed by 8,3 ms          82A.

In this manner, the tail current rapidly decreases and even a slight delay in starting of stud plunge might cause a failed welding.

d) Decrease of the welding current due to a fluctuation in the power source voltage can not be immediately compensated. Specifically, at least a time from one half to one Hz is required for such compensation. With the consequence, there often occurs a failed welding due to insufficient or excessive welding arc current.

As will be apparent from Fig. 13, the power control unit of single-phase full-wave rectification type has the current period of 1/120 sec (at the commercial frequency of 60 Hz) and requires a time from 1/120 to 1/60 sec (at the commercial frequency of 60 Hz) to achieve a proper current compensation after a current fluctuation due to a power source voltage fluctuation or the other various external fluctuations has been electrically detected.

For example, in occurrence of fluctuating current (decrease in current) (1), a current compensation is effected 1/120 to 1/60 sec after and waves (3) and (4) are compensated. However, waves (1), (2) summing to one half of the full waveform remain deficient and, in total, only one half of the full waveform is compensated.

e) Polarity switching can not be smoothly done.

In the conventional stud welding, the polarity must be switched depending on material and size of a stud to be welded to a base metal even though the base metal is one and the same.

Usually, the DC welding power unit is externally provided with a pair of electromagnetic contactors $MS_1$, $MS_2$ are simultaneously actuated to achieve the polarity switching. In the illustrated situation, the stud A is at (+) polarity. Upon actuation of the contactors $MS_1$, $MS_2$, the circuit associated with the stud A is opened while the circuit associated with another stud B is closed and, in consequence, the stud B becomes of (-) polarity.

The above-mentioned problems are solved, in accordance with the present invention, by adopting a DC power unit of inverter type for stud welding so as to enlarge an acceptable range of welding conditions and thereby to stabilize a welding quality.

A three-phase AC power is converted by the rectifier circuit comprising, for example, diodes to DC power which is, in turn, converted by the inverter circuit comprising, for example, power transistors to pulsating AC power of 1000 to 10000 Hz, and this AC power is supplied to a primary side of a welding transformer, from a secondary side of which the DC stud welding current is taken out through a diode and a DC reactor.

The above objects and features of the present invention will become more apparent from the following detailed description taken in conjunction with the accompanying drawings, wherein:

Figs. 1 through 7 illustrate features of the present invention, in which:

Fig. 1 is circuit diagram generally illustrating an electrical arrangement of the present invention;

Fig. 2 is a graphic diagram illustrating how a period of welding current can be varied by an inverter;

Fig. 3 is a graphic diagram illustrating how a period as well as a waveform of the welding current can be varied by the inverter;

Fig. 4 is a graphic diagram illustrating by way of an example how the waveform of the welding current can be varied by the inverter;

Fig. 5 is a graphic diagram illustrating by way of another example how the waveform of the welding current can be varied by the inverter;

Fig. 6 is a graphic diagram illustrating tail current versus timing of stud plunge operation in the case of inverter type power unit; and

Fig. 7 is a graphic diagram illustrating welding current compensation rate versus source voltage fluctuation; and

Figs. 8 through 14 illustrate the prior art, in which:

Fig. 8 is a circuit diagram generally illustrating an electrical arrangement in the prior art utilizing single-phase AC power;

Fig. 9 is a graphic diagram illustrating respective waveforms of DC voltage and DC current provided by single-phase full-wave rectification;

Fig. 10 is a graphic diagram illustrating a waveform of the welding current;

Fig. 11 is a graphic diagram illustrating an entire process of stud welding;

Fig. 12 is a graphic diagram illustrating tail current versus timing of stud plunge operation;

Fig. 13 is a graphic diagram illustrating compensation of the welding current fluctuation occurring due to the power source voltage fluctuation; and

Fig. 14 is a schematic diagram showing a polarity switching circuit.

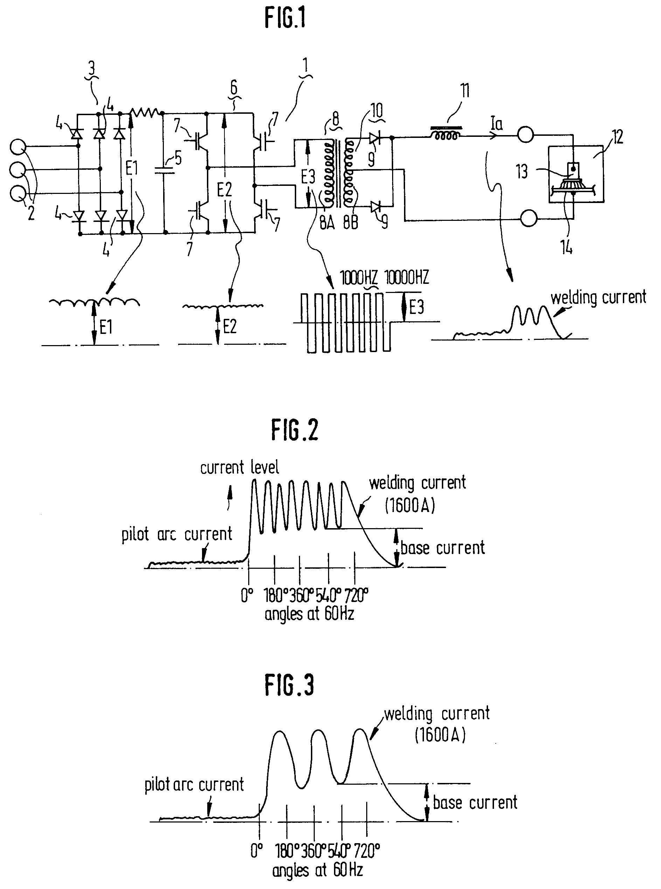

Reference numeral 1 in Fig. 1 designates an electric circuitry arranged in accordance with the present invention and reference numeral 2 designates a three-phase AC source terminal serving for supply of three-phase AC power. Reference numeral 3 designates a rectifier circuit comprising an appropriate combination of diodes 4 serving as rectifier elements to provide pulsating DC output voltage $E_1$. Reference numeral 5 designates a smoothing capacitor connected in parallel to said rectifier circuit 3. Reference numeral 6 designates an inverter circuit comprising, for example, power transistors 7, said inverter circuit 6 being connected to the output side of said rectifier circuit 3 so that a DC output voltage $E_2$ having been smoothed by said smoothing capacitor 5 is supplied to said inverter circuit 6. Said inverter circuit 6 is adapted to output pulsating AC power $E_3$ having a frequency of 1000 to 10000 Hz. Such frequency is preset by the power transistors. Reference numeral 8 designates a welding transformer connected to the output side of said inverter circuit 6 and supplied at a primary side 8A with said pulsating AC power $E_3$. In parallel to a secondary side 8B of said welding transformer 8, there is connected AC/DC converter circuit 10 comprising, for example, diodes 9 (thyristors) in series with which a DC reactor 11 is connected. Reference numeral 12 designates a load actually serving to weld a stud 13 to a base metal 14.

Unlike the conventional power control unit of single-phase full-wave rectification type in which the period of current variation is limited to an electrical angle of 180° (commercial frequency of 50 or 60 Hz), the present invention allows this period of current variation to be increased by 1000 Hz/60 Hz = 16,6 times to 10000 Hz/60 Hz = 166 times, since the pulse frequency to the welding transformer is set to 1000 to 10000 Hz in the power unit of inverter type constructed according to the teachings of the present invention. Thus, according to the present invention, not only the current of 16,6 to 166 times can be obtained within the conventional electrical angle of 180° but also the current waveform of an electrical angle larger than 180° can be also obtained. Fig. 2 shows a waveform of welding current $I_a$ having a doubled period.

Fig. 3 shows a waveform of welding current $I_a$ having a period of 180°/270° = 0,666 times.

Furthermore, the present invention allows the welding current $I_a$ to be selectively converted to sinusoidal wave current, trapezoidal wave current or triangular wave current as shown by Fig. 3, 4 and 5, respectively.

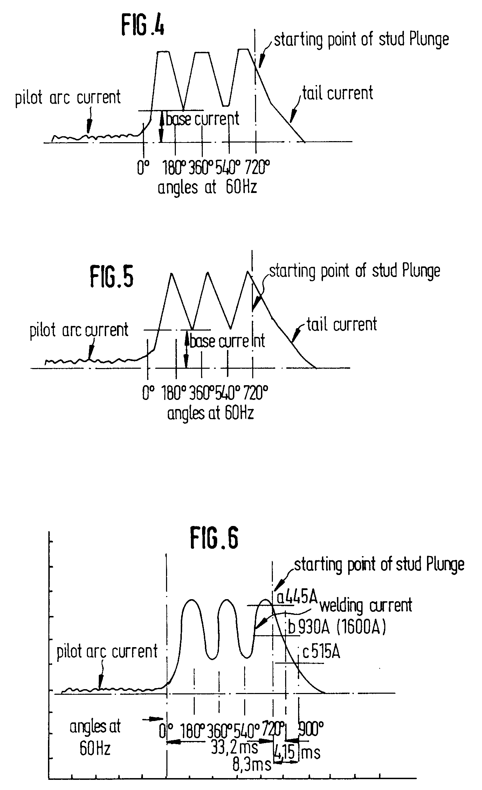

A trapezoidal wave-form current of Fig. 4 or a triangle wave-form current of Fig. 5 can be obtained by a combination of the smoothing capacitor 5 and the power transistor 7 of the inverter circuit 6.

In this manner, one of these current waveforms may be selected as desired not only to enlarge the selection range of welding conditions but also to facilitate welding for various kinds of metal.

Base current also can be varied in a range of 200 to 1000A. The above-mentioned construction according to the invention allows also the tail current to be selected as desired. In general, the arc must continue to be formed during the final stage of welding process in which the partially molten stud is plunged against the partially molten base metal. Operation of the stud plunge against the base metal after the arc has been extinguished or the tail current has decreased down to an unacceptable level would result in failed welding. In view of this, it is essential to set a proper time point at which the operation of the stud plunge against the base metal is started, as has previously been mentioned.

It is desired, accordingly, that the tail current as high as possible should be maintained for a duration as long as possible.

With the inverter type power control unit provided by the present invention, it is also possible to select the attenuation pattern of the tail current as desired, by converting the period of the welding current and therefore it is possible to eliminate the instability of welding as has been encountered by the conventional power control unit relying on single-phase full-wave rectification.

Fig. 6 illustrates a manner in which one embodiment of the inverter type power unit constructed according to the teachings of the invention operates. As will be apparent, the tail current gradually decreases from the maximum level at the optimal point a down to 930A at a point b which is later with respect to said point a by 4,15 ms and further down to 515A at a point c which is later with respect to said point b by 8,3 ms. However, unlike the conventional power unit of single-phase full-wave rectification type (Fig. 12), this embodiment of the invention provides the welding current $I_a$ sufficient to maintain the arc during operation of pressing the stud against the base metal. Furthermore, the above-mentioned arrangement of the present invention allows the welding current to be compensated substantially by 100% even when there occurs a fluctuation in the source voltage. In general, it is undesirable that the welding current fluctuates due to a load fluctuation caused by a source voltage fluctuation or a resistance fluctuation occurring in a contact zone of welding cable and welding base metal.

Conventionally, such fluctuation has been compensated in 1/120 to 1/60 sec after occurrence thereof as shown by Fig. 13. The present invention allows such fluctuation to be compensated in 1/2000 to 1/20000 sec after occurrence thereof as will be apparent from Fig. 7.

Basically, it is essential for the arc welding to maintain the welding current at a constant level during the welding process and, in view of a fact that a duration over which the welding current flows is extremely short, possibly occurring fluctuation in the welding current should be compensated as immediately as possible. Such requirement is satisfied only by the inverter type power unit of the present invention.

The above-mentioned arrangement of the present invention further allows a smooth polarity switching to be electrically achieved utilizing the thyristors so that the power control unit may be used with straight or reverse polarity.

The effects of the present invention are:

a) Adoption of the inverter circuit enables a frequency of the pulsating AC power supplied to the welding transformer to be adjusted in a range from 1000 to 10000 Hz and thereby a desired waveform of the welding current to be selected so as to enlarge a selectable range of the welding conditions, on one hand, and the weldability between dissimilar metals facilitated, on the other hand.

b) Attenuation pattern of the tail current can be adjusted as desired by properly varying a period of the welding current and thereby the instability of welding result as the prior art has often encountered due to improper timing of stud plunge operation can be avoided.

c) Fluctuation in the welding current possibly occurring due to a fluctuation in the source voltage can be compensated substantially by 100%.

d) Polarity switching can be smoothly achieved by electrical means for use of the power unit with straight or reverse polarity.

**Claims**

1. Inverter type power control unit for stud welding comprising a rectifier circuit (3) to convert three-phase AC power (2) to DC power, an inverter circuit (6) adapted to be supplied with said DC power and to convert this DC power to pulsating AC power (E3), and a welding transformer (8) adapted to be supplied at the primary side with said pulsating AC power (E3) and to output, in turn, at the secondary side DC welding current through a convertor and a DC reactor (11).

2. Inverter type power control unit for stud welding as recited in claim 1, wherein said welding current is selectively convertible to sinusoidal, trapezoidal or triangular pulsating current and wherein the pulse generation period is variable from 1/240 to 1/30 sec.

3. Inverter type power control unit for stud welding as recited in claim 1, wherein, at the final stage of welding, said welding current gradually decreases from the maximum level thereof during a duration of at most 50 ms to provide tail current desired at this final stage.

4. Inverter type power control unit for stud welding as recited in claim 1, wherein the loss of the welding current is compensated substantially by 100%.

5. Inverter type power control unit for stud welding as recited in claim 1, wherein a polarity switching is electrically effected within an electric circuitry (1) that the power unit can be used with straight or reverse polarity as desired.

## FIG.1

## FIG.2

## FIG.3

FIG.4

starting point of stud Plunge

pilot arc current

tail current

base current

0°  180° 360° 540° 720°
angles at 60Hz

FIG.5

starting point of stud Plunge

pilot arc current

base current

tail current

0°  180° 360° 540° 720°
angles at 60Hz

FIG.6

starting point of stud Plunge

a 445A welding current
b 930A (1600A)
c 515A

pilot arc current

angles at 60Hz

0°  180° 360° 540° 720°  900°
33,2 ms
8,3ms
4,15 ms

7

FIG.7

FIG.8 (Prior Art)

FIG.9 (Prior Art)

FIG.10 (Prior Art)

## FIG.11 (Prior Art)

pilot arc    welding arc

Oms    33,2ms

stud
base metal
starting point of Plunge

welding current
Pilot arc current

complation of Plunge
tail current

0° 180° 360° 540° 720°

## FIG.12 (Prior Art)

starting point of stud Plunge

a 680A (1600)
b 245A
c 82A

0

0° 180° 360° 540°720°900°

60Hz    33,2ms    4,15 ms
8,30ms

## FIG.13 (Prior Art)

① ② ③ ④

0

1/120S    1/60S

## FIG.14 (Prior Art)

MS1

power source

a
b
c
d

MS2

A    B

base metal

9